# EUROPEAN PATENT APPLICATION

(11) **EP 4 851 517 A1**
(43) Date of publication of application: **09.12.2026**
(21) Application number: 25882163.6
(22) Date of filing: 03.07.2025
(51) Int. Cl.: F16L 59/02, C08K 3/36, C08L 101/00, C09D 7/61, C09D 129/04, C09D 171/02

(54) **COMPOSITION FOR HEAT INSULATING MATERIAL AND HEAT INSULATING MATERIAL**

(30) Priority: 24.10.2024 JP 2024187444
(71) Applicant: Sumitomo Riko Company Limited, Komaki-shi, Aichi 485-8550 (JP)
(72) Inventor: HONJO, Yasuhiro, Komaki-shi, Aichi 485-8550 (JP)
(74) Representative: Müller-Boré & Partner Patentanwälte PartG mbB
(86) International application number: PCT/JP2025/024015
(87) International publication number: WO 2026/088529

(57) **Abstract**

This composition for a heat insulating material comprises a silica aerogel, a polymer having a function to disperse the silica aerogel, inorganic particles having a hydroxyl group on the surface thereof, and a liquid. The composition for a heat insulating material satisfies the following condition (I) when the spinnability of a measurement liquid, which is obtained by removing the silica aerogel from the composition, is measured: "(I) The thread length obtained at a pulling speed of 4 mm/s is 40 mm or less." The composition for a heat insulating material can suppress crack formation during drying. The heat insulating material comprises a cured product of the composition for a heat insulating material. The heat insulating material has few cracks in the cured product thereof and exhibits excellent heat insulation properties.

## Description

### Technical Field

The disclosure relates to a thermal insulation material composition and a thermal insulation material using silica aerogel.

### Related Art

Various thermal insulation materials have been developed by utilizing the high thermal insulation property of silica aerogel. A thermal insulation material using silica aerogel may be manufactured by applying a coating material (thermal insulation material composition) in which silica aerogel is dispersed in a binder liquid to a substrate and drying the coating material, as described in Patent Document 1, for example. An organic binder such as urethane resin is used as the binder. In this case, when the thermal insulation material is used in a high-temperature atmosphere, the organic components of the binder may be decomposed and deteriorate to generating gas or cause cracks, the shape may be unable to maintain. Therefore, from the perspective of heat resistance and the like, thermal insulation materials using inorganic binders such as silica nanoparticles have been developed, as described in Patent Documents 2 and 3.

### Citation List

### Patent Document(s)

Patent Document 1: Japanese Patent Application Laid-Open Publication No. 2020-29528
Patent Document 2: Japanese Patent Application Laid-Open Publication No. 2021-143733
Patent Document 3: Japanese Patent Application Laid-Open Publication No. 2022-55295

### SUMMARY OF INVENTION

### Technical Problem

When silica nanoparticles are used as the binder, the issues caused by the decomposition and deterioration of the binder component are improved; however, there is a challenge in that cracks tend to occur in the thermal insulation layer (cured product) obtained when the thermal insulation material composition is applied to a substrate and dried. In this regard, Patent Document 3 focuses on the fact that the use of an inorganic binder tends to make the cured product hard and brittle, and describes that the occurrence of cracks is suppressed by blending a thickener to impart flexibility to the cured product. However, blending a thickener alone may not sufficiently suppress the occurrence of cracks, and further investigation has been desired.

The disclosure has been made in view of such circumstances, and an object thereof is to provide a thermal insulation material composition in which cracks are less likely to occur during drying. Another object is to provide a thermal insulation material having fewer cracks and excelling in thermal insulation properties by using the thermal insulation material composition. Solution to Problem
(1) In order to solve the above-mentioned challenges, the thermal insulation material composition of the disclosure is a thermal insulation material composition including: silica aerogel; a polymer having a dispersion function for the silica aerogel; inorganic particles having a hydroxyl group on a surface thereof; and a liquid. In a case where a stringiness of a measurement liquid obtained by excluding the silica aerogel from the thermal insulation material composition is measured, Condition (I) as follows is satisfied:
   (I) a string length measured at a pulling speed of 4 mm/s is 40 mm or less.

The inventors of the disclosure conducted extensive investigations into the causes of the occurrence of cracks in the case where a thermal insulation material composition (hereinafter, may be referred to simply as "composition") is applied to a substrate and dried, and obtained the finding that the cohesive force of particles contained in the composition is involved. As described in Patent Documents 1 to 3, polymers such as carboxymethyl cellulose, polyethylene oxide, and polyvinyl alcohol may be blended into the composition as a thickener in order to enhance the dispersibility of the silica aerogel, among other purposes. In addition, as described above, polymers such as urethane resin may be blended as a binder. For example, in the case where the polymer chains are adsorbed onto silica particles via hydrogen bonding or the like, a network is formed via the silica particles, the distance between the silica particles decreases, and the cohesive force increases. It is considered that this causes the coating film to shrink during drying, resulting in the occurrence of cracks. The inventors focused on this phenomenon and found that there is a correlation between the cohesive force of silica particles and the stringiness (property of drawing a string) of the composition.

In the thermal insulation material composition of the disclosure made based on such findings, the stringiness of the measurement liquid obtained by excluding the silica aerogel from the composition is controlled so as to satisfy Condition (I), thereby reducing the cohesive force of the inorganic particles contained therein and suppressing the occurrence of cracks. Here, the reason why the stringiness measurement is performed using the measurement liquid rather than the entire composition is that, in the state where silica aerogel is included, the number of particles becomes too large to accurately measure the stringiness. In the case where the measurement liquid is pulled upward, the shorter the string length (the length until the thread-like liquid is broken), the more easily the polymer chains are cut, that is, the less the interaction between the polymer chains and the inorganic particles. In the disclosure, the string length at a pulling speed of 4 mm/s is regarded as the string length in a state where no shear force is applied to the measurement liquid (a state close to a stationary state). Therefore, when Condition (I) is satisfied, the cohesive force of the inorganic particles in the composition is small, and thus the occurrence of cracks during drying may be suppressed. In addition, by measuring the stringiness of the measurement liquid, it is possible to predict whether cracks may occur. According to the investigations by the inventors, even when the viscosity of the measurement liquid is the same, cracks may or may not occur, and therefore the occurrence of cracks cannot be suppressed by adjusting the viscosity of the measurement liquid alone.

(2) In the above configuration, the stringiness of the measurement liquid may further satisfy Condition (II) as follows:
(II) a value, that is, a stringiness ratio of a string length measured at a pulling speed of 100 mm/s relative to a string length measured at a pulling speed of 4 mm/s is 2 or more.

At the time when the thermal insulation material composition is stirred or applied to a substrate using a coating machine or the like, a shear force is applied to the composition. When a shear force is applied to the composition, the entanglement of the polymer chains is released and the chains become linear, making it easier to form hydrogen bonds with the inorganic particles having a hydroxyl group on the surface. It is considered that this causes the network via the inorganic particles to expand and the gelation to proceed. Therefore, it is considered that when the composition in which gelation has proceeded is dried as is, the cohesive force of the inorganic particles becomes larger, and cracks are more likely to occur.

In the configuration, the string length at a pulling speed of 100 mm/s is regarded as the string length in a state where a shear force is applied to the measurement liquid, and based on the ratio (stringiness ratio) of this string length to the string length in a state where no shear force is applied, the recoverability (relaxation of gelation) of the composition after gelation due to stirring, coating, or the like is determined. That is, if the string length in a state where a shear force is applied is 2 or more relative to the string length in a state where no shear force is applied, the relaxation of gelation is determined to be large. If the relaxation of gelation is large, even if gelation occurs once due to stirring, coating, or the like, the composition tends to return to its original state, and thus the cohesive force of the inorganic particles decreases, and the occurrence of cracks may be suppressed.

(3) In any of the above configurations, the inorganic particles may include silica particles. Silica particles have good compatibility with liquids such as water, and excel in bondability and reinforcing properties with other materials. Therefore, the silica particles are suitable as a filler blended for purposes such as an inorganic binder and reinforcement.

(4) In any of the above configurations, the inorganic particles may include nanoparticles having a mean particle diameter of 8 nm or more and 45 nm or less. In the configuration, the nanoparticles act as an inorganic binder. When an inorganic binder is used, a cured product of the thermal insulation material composition is less likely to deform even in the case of use in a high-temperature atmosphere of, for example, 350°C or more. In addition, the cured product is less likely to be crushed even when compressed. As a result, the occurrence of cracks due to deformation and peeling from the substrate may be suppressed. The thermal insulation material composition of the configuration is suitable for applications in which heat resistance is particularly required.

(5) In the configuration of (4) above, a content of the nanoparticles may be 1 part by mass or more and 70 parts by mass or less relative to 100 parts by mass of the silica aerogel. According to the configuration, the number of reaction sites between the polymer contained in the composition and the nanoparticles may be reduced while securing the binder function. As a result, the cohesive force of the inorganic particles including the nanoparticles may be reduced.

(6) In any of the above configurations, the liquid may include water, and the polymer may be a water-soluble resin. Many silica aerogels have hydrophobic sites on the surface so that moisture and the like do not penetrate into the interior and collapse the pores. Therefore, it is desirable to use a hydrophilic liquid such as water, which is less likely to penetrate into the pores of the silica aerogel, as the liquid constituting the composition. On the other hand, silica aerogels are less compatible with water due to the hydrophobic sites on the surface. In addition, since the specific gravity is low, the silica aerogel tends to float on water. For this reason, when water is used as the liquid, it is difficult to disperse the silica aerogel. In this regard, according to the configuration, since a water-soluble resin is used as the polymer having a dispersion function of the silica aerogel, the silica aerogel can be dispersed with ease even in the case where water is used.

(7) In the configuration of (6) above, the water-soluble resin may include one or more selected from polyoxyalkylene and polyvinyl alcohol.

(8) In the configuration of (7) above, the polyoxyalkylene may include polyethylene oxide, polyethylene glycol, polyalkylene glycol, polypropylene glycol, polyoxyethylene, and polytetramethylene glycol.

(9) A thermal insulation material of the disclosure includes a cured product of the thermal insulation material composition of any of the above configurations. The thermal insulation material composition of the disclosure is less likely to develop cracks upon drying. Therefore, the thermal insulation material of the disclosure has fewer cracks in the cured product and excels in thermal insulation property.

(10) In the configuration of (9) above, the cured product may exhibit a sheet shape. According to the configuration, in addition to placing the cured product as is, the cured product may be bent, wound around a member, or wrapped around a member, making it easy to apply to various applications.

(11) In the configuration of (9) or (10) above, the thermal insulation material may include the cured product and a substrate supporting the cured product. By combining the cured product and the substrate, the strength of the thermal insulation material is enhanced, and the effect of suppressing the detachment of the silica aerogel is enhanced.

### Effects of Invention

According to the thermal insulation material composition of the disclosure, the occurrence of cracks upon drying can be suppressed by reducing the cohesive force of the inorganic particles. In addition, by measuring the stringiness of the measurement liquid, the occurrence of cracks can be predicted. The thermal insulation material of the disclosure includes a cured product of the thermal insulation material composition of the disclosure, and therefore has fewer cracks and excels in thermal insulation property.

### BRIEF DESCRIPTION OF DRAWINGS

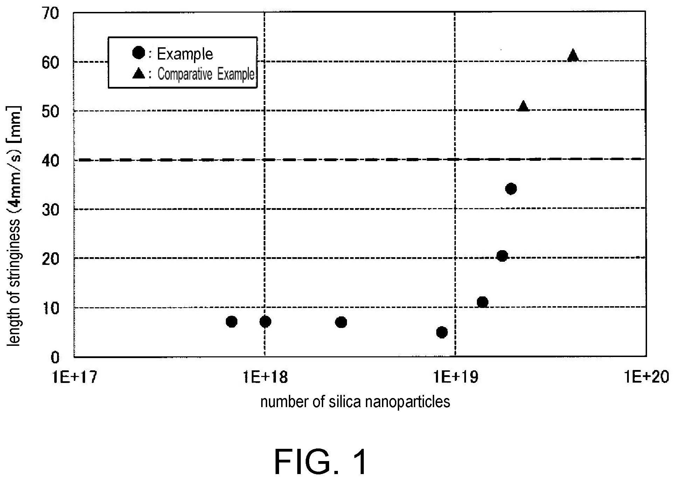

[FIG. 1] FIG. 1 is a graph showing the relationship between the number of silica nanoparticles contained in a measurement liquid and the stringiness.

### DESCRIPTION OF EMBODIMENTS

Hereinafter, embodiments of the thermal insulation material composition and the thermal insulation material of the disclosure will be described. The thermal insulation material composition and the thermal insulation material of the disclosure are not limited to the following embodiments, and may be implemented in various forms with modifications, improvements, and the like that a person skilled in the art may make without departing from the gist of the disclosure.

### <Thermal Insulation Material Composition>

The thermal insulation material composition of the disclosure includes a silica aerogel, a polymer having a dispersion function for the silica aerogel, inorganic particles having a hydroxyl group on a surface thereof, and a liquid.

### [Silica Aerogel]

The structure, shape, size, and the like of the silica aerogel are not particularly limited. For example, the diameter of silica fine particles (primary particles) forming the skeleton of the silica aerogel is preferably about 2 to 5 nm, and the size of pores formed between the skeletons is preferably about 10 to 50 nm. A majority of the pores are so-called mesopores of 50 nm or less. Since the mesopores are smaller than the mean free path of air, the convection of air is restricted and heat transfer is inhibited. As a result, the silica aerogel has a high thermal insulation property.

The shape of the silica aerogel includes a spherical shape, an irregularly shaped lump, and the like, and a spherical shape is preferable. In the case of a spherical shape, the dispersibility is improved, making it easier to prepare the composition. In addition, since close packing is facilitated, the filling amount can be increased, and the effect of enhancing the thermal insulation property is increased. Furthermore, since the surface area is reduced, the amount of the binder having a relatively high thermal conductivity can be reduced, leading to an improvement in the thermal insulation property.

In the case where the maximum length of the silica aerogel is taken as the particle diameter, the mean particle diameter is preferably about 1 to 200 µm. As the particle diameter of the silica aerogel increases, the surface area decreases and the pore (void) volume increases, so the effect of enhancing the thermal insulation property increases. For example, those having a mean particle diameter of 10 µm or more are preferable. On the other hand, considering the stability of the composition and the ease of coating, those having a mean particle diameter of 100 µm or less are preferable. In addition, in the case where two or more types having different particle diameters are used in combination, silica aerogel having a smaller diameter enters the gaps between silica aerogel having a larger diameter, so the filling amount may be increased and the effect of enhancing the thermal insulation property increases. As the mean particle diameter of the silica aerogel, a median diameter (D₅₀) obtained from a volume-based particle size distribution measured by a laser diffraction/scattering method may be adopted.

The silica aerogel preferably has a hydrophobic site on at least the surface thereof between the surface and the interior. Having a hydrophobic site on at least the surface thereof makes it possible to suppress the penetration of moisture and the like, so that the pore structure is maintained and the thermal insulation property is less likely to be impaired. The production method of the silica aerogel is not particularly limited, and a drying process may be performed at normal pressure or under a supercritical condition. Depending on the drying method used at the time of producing the aerogel, those dried at normal pressure may be referred to as "xerogel," those dried under supercritical conditions as "aerogel," and those freeze-dried as "cryogel," but in the present specification, these are collectively referred to as "aerogel."

### [Polymer]

The thermal insulation material composition of the disclosure includes a polymer having a dispersion function for the silica aerogel (hereinafter, may be referred to as a "polymer as a dispersant"). The thermal insulation material composition of the disclosure may include a polymer as a binder for binding constituent components to each other, separately from the polymer as a dispersant for the silica aerogel. Of course, the polymer having a dispersion function for the silica aerogel may also have a binder function.

The polymer as a dispersant improves the dispersibility of the silica aerogel during preparation of the composition or during the pulverization process of the silica aerogel in the presence of a liquid. For example, in the case where the liquid is water, suitable examples of the polymer include water-soluble resins such as polysaccharides such as carboxymethyl cellulose (CMC), carboxyethyl cellulose, carboxypropyl cellulose, hydroxyethyl cellulose, and hydroxypropyl cellulose, polyoxyalkylene, and polyvinyl alcohol (PVA). One type or two or more types selected from these may be used. Examples of the polyoxyalkylene include polyethylene oxide (PEO), polyethylene glycol (PEG), polyalkylene glycol, polypropylene glycol (PPG), polyoxyethylene, and polytetramethylene glycol.

In the case where a polymer as a binder is used separately from the polymer as a dispersant, a resin having a glass transition temperature (Tg) of -5°C or lower, and, furthermore, -20°C or lower, is preferable from the viewpoint of having high adhesiveness to the silica aerogel and making the cured product of the composition flexible to suppress the occurrence of cracks. Examples thereof include acrylic resins, urethane resins, silicone resins, mixtures of acrylic resins and urethane resins, and mixtures of acrylic resins and silicone resins.

### [Inorganic Particles]

The thermal insulation material composition of the disclosure includes inorganic particles having a hydroxyl group on a surface thereof. The thermal insulation material composition of the disclosure may include inorganic particles not having a hydroxyl group on a surface thereof, separately from the inorganic particles having a hydroxyl group on a surface thereof. Examples of the inorganic particles having a hydroxyl group on a surface thereof include particles of silica, alumina, titanium oxide, and zinc oxide. Among these, silica particles have good compatibility with liquids such as water and excel in bondability and reinforcing properties with other materials. Therefore, the silica particles are suitable as a filler blended for the purpose such as an inorganic binder and reinforcement.

Among the inorganic particles, particles on the nanometer order (nanoparticles) are suitable as an inorganic binder. When nanoparticles are used, the drawbacks of hardness and brittleness caused by blending inorganic materials in the cured product of the thermal insulation material composition can be reduced. The mean particle diameter of the nanoparticles may be 1 nm or more and 100 nm or less, and further 8 nm or more and 45 nm or less. For example, examples of a binder liquid having silica nanoparticles include a sodium silicate solution and colloidal silica using water as a dispersion medium.

According to the studies conducted by the inventors, in the case where nanoparticles have a hydroxyl group on a surface thereof, the particle diameter and the content thereof have a large influence on the stringiness of a measurement liquid. For example, from the viewpoint of reducing the stringiness by relatively reducing the number of nanoparticles and reducing the reaction sites between the polymer and the nanoparticles, in the case where the mean particle diameter of the nanoparticles is 8 nm or more and 45 nm or less, the content thereof may be 1 part by mass or more and 70 parts by mass or less with respect to 100 parts by mass of the silica aerogel.

Among the inorganic particles, particles having a particle diameter of 1 µm or more are suitable as a filler for texture adjustment and reinforcement. As the filler, particles having a relatively high hardness, such as precipitated silica, gel silica, fused silica, wollastonite, potassium titanate, magnesium silicate, glass flakes, calcium carbonate, and barium sulfate, may be used.

### [Liquid]

The liquid may be appropriately selected according to the type of silica aerogel and the like. For example, water (including pure water, tap water, and the like) is suitable. In addition, a small amount of organic solvent may be added to the water in order to enhance the dispersibility of the silica aerogel or to improve the drying properties.

### [Other Components]

The thermal insulation material composition of the disclosure may contain infrared shielding particles, inorganic fibers, flame retardants, and the like, in addition to the silica aerogel, polymer, and inorganic particles described above. The infrared shielding particles absorb heat from a heat source and re-emit the heat from a surface on the heat source side, thereby blocking radiant heat from the heat source and contributing to the enhancement of the thermal insulation property, particularly at a high temperature. Examples of such particles include particles of silicon carbide, kaolinite, silicon nitride, mica, alumina, zirconia, aluminum nitride, zirconium silicate, cerium oxide, boron carbide, manganese oxide, tin oxide, iron oxide, and titanium oxide. The inorganic fibers are physically entangled around the silica aerogel, thereby improving the mechanical strength of the thermal insulation layer and suppressing the detachment of the silica aerogel. For example, ceramic fibers such as glass fibers and alumina fibers are suitable. As the flame retardant, those already known, such as halogen-based, phosphorus-based, and metal hydroxide-based flame retardants, may be used. In consideration of environmental impact, it is desirable to use a phosphorus-based flame retardant. Examples of the phosphorus-based flame retardant include ammonium polyphosphate, red phosphorus, and phosphate esters.

### [Stringiness of Measurement Liquid]

The thermal insulation material composition of the disclosure satisfies Condition (I) in which, in a case of measuring the stringiness of a measurement liquid obtained by excluding the silica aerogel from the composition, a string length measured at a pulling speed of 4 mm/s is 40 mm or less. The stringiness may be measured by immersing a probe in the measurement liquid at room temperature (20°C ± 5°C), pulling up the probe vertically at a constant speed to stretch the measurement liquid, and measuring the length at which the string breaks. For the measurement of stringiness, for example, "Stringiness/Spinnability/Coagulation Measurement Device NEVA^{®} METER" manufactured by Ishikawa Iron Works Co., Ltd. may be used. In consideration of the ease of measurement, it is desirable that the solid content concentration of the measurement liquid be 3 mass% or more and 10 mass% or less.

In the case where the gelation of the composition due to stirring, coating, and the like is considered, it is desirable that the stringiness of the measurement liquid further satisfies Condition (II) in which a stringiness ratio calculated by the following formula (a) is 2 or more. 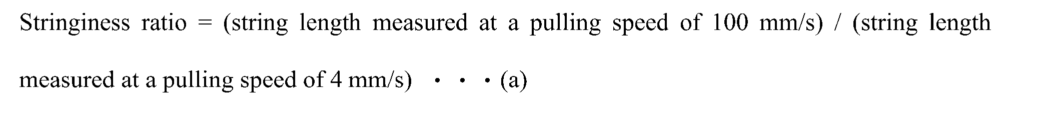 Stringiness ratio = (string length measured at a pulling speed of 100 mm/s) / (string length measured at a pulling speed of 4 mm/s) •••(a) In the case where Condition (II) is satisfied, since the relaxation of gelation is large, even if gelation occurs once due to stirring, coating, or the like, the composition tends to return to the original state in which the cohesive force of the inorganic particles is small. Therefore, the occurrence of cracks is suppressed.

### [Method for Preparing Composition]

The thermal insulation material composition of the disclosure may be prepared by stirring silica aerogel, a polymer having a dispersion function for silica aerogel, inorganic particles having a hydroxyl group on the surfaces, a liquid, and components added as needed. The stirring may be blade stirring, or a shear force may be actively applied, or ultrasonic waves may be applied. A rotation-revolution stirring device, a media-type stirring device, or an intensive mixer may also be used.

### <Thermal Insulation Material>

The thermal insulation material of the disclosure includes a cured product of the thermal insulation material composition of the disclosure described above. The cured product includes both a form in which the components of the composition are solidified by a chemical reaction and a form in which the composition is solidified by evaporation of a liquid without a chemical reaction. The cured product is manufactured by applying the composition and then drying the composition at a temperature of approximately room temperature to 150°C for a predetermined period of time. From the viewpoint of enhancing the thermal insulation property of the cured product, the content of silica aerogel in the cured product is desirably 40 mass% or more in the case where the total mass of the cured product is 100 mass%. It is more preferable that the content is 50 mass% or more, or 65 mass% or more. On the other hand, since an excessive amount of silica aerogel tends to cause detachment, the content of silica aerogel is desirably 75 mass% or less in the case where the total mass of the cured product is 100 mass%.

The shape of the cured product is not particularly limited, but may be formed into, for example, a sheet shape. In this case, in addition to placing the cured product as is, the cured product may be bent, wound around a member, or used to wrap a member, making it easy to apply to various uses. The thermal insulation material of the disclosure may be formed by the cured product of the thermal insulation material composition of the disclosure alone, or may be formed by a combination of the cured product and other members. For example, the thermal insulation material of the disclosure may be configured to include the cured product and a substrate that supports the cured product. In this case, the cured product may be in a form of being laminated on the substrate, or may be in a form in which a portion of the cured product has penetrated into the interior of the substrate. By combining the cured product and the substrate, the strength of the thermal insulation material is enhanced, and the effect of suppressing the detachment of silica aerogel is also enhanced.

Examples of materials for the substrate include fabrics such as nonwoven fabric, resins, and the like. Examples of fibers constituting the fabric include glass fibers, rock wool, ceramic fibers, alumina fibers, silica fibers, carbon fibers, metal fibers, polyimide fibers, aramid fibers, and polyphenylene sulfide (PPS) fibers. As ceramic fibers, refractory ceramic fibers (RCF), polycrystalline alumina fibers (Polycrystalline Wool: PCW), and alkaline earth silicate (AES) fibers are known. Among these, AES fibers have higher safety due to its biosolubility. Examples of resins include polyethylene terephthalate (PET), polyimide, polyamide, and PPS. The shape of the substrate is not particularly limited, and examples thereof include woven fabrics, nonwoven fabrics, blankets, films, sheets, and molded bodies. The substrate may be formed by a single layer or a laminate in which the same material or different materials are laminated in two or more layers. Examples of the laminate include an aluminum-deposited film and an aluminum glass cloth.

For example, fabrics (woven fabrics) and nonwoven fabrics manufactured from inorganic fibers such as glass fibers and metal fibers, such as glass cloth, have a relatively low thermal conductivity and exhibit high shape retention even in a high-temperature atmosphere. In addition, when a substrate with high heat resistance is adopted, the application to uses requiring high heat resistance is allowed. Accordingly, it is possible to more widely apply the thermal insulation material of the disclosure. Furthermore, adopting a substrate having fire resistance makes it possible to protect the cured product from flames. A substrate with high heat resistance may be manufactured from glass fibers, rock wool, ceramic fibers, polyimide, PPS, or the like, and specific examples thereof include glass fiber nonwoven fabrics, glass clothes, aluminum glass clothes, AES wool paper, and polyimide fiber nonwoven fabrics.

A thermal insulation material in a form in which the cured product is laminated on the substrate or in a form in which a portion of the cured product has penetrated into the interior of the substrate may be manufactured by applying the composition of the disclosure to the surface of the substrate and drying the coating film. Alternatively, the substrate may be immersed in the composition of the disclosure and then dried. In either the application or immersion method, in the case where the substrate is formed by a fabric or a porous material, a portion of the composition is impregnated into the interior of the substrate. As a result, the cured product is disposed not only on the surface of the substrate but also in the interior thereof. In this case, the bendability of the thermal insulation material is enhanced, making it easier to follow a deformation such as curving. Therefore, the thermal insulation material is also easy to apply to members having a curved surface such as pipes. For the application, a coating machine such as a bar coater, a die coater, a comma coater (registered trademark), or a roll coater, or a spray may be used. In addition, in order to enhance the adhesion between the substrate and the cured product, a pretreatment such as a coupling treatment may be applied to the surface of the substrate.

### Examples

Next, the disclosure will be described more specifically with reference to examples.

### (1) Stringiness of Measurement Liquid

### <Preparation of Measurement Liquid>

First, in the process of manufacturing a thermal insulation material composition having the composition shown in Table 1 below (unit: parts by mass), a measurement liquid containing no silica aerogel was manufactured. Specifically, carboxymethyl cellulose sodium salt (CMC-Na) ("BSH-12" manufactured by Daiichi Kogyo Seiyaku Co., Ltd.) functioning mainly as a dispersant, and polyethylene oxide (PEO) ("PEO-8" manufactured by Sumitomo Seika Chemicals Co., Ltd.), colloidal silica as an inorganic binder (aqueous dispersion of silica particles; "Snowtex (registered trademark) ST-30" manufactured by Nissan Chemical Corporation), silica powder as a filler ("Nipsil (registered trademark) VN3" manufactured by Tosoh Silica Corporation, mean particle diameter 10 µm), and water were charged into a kneader and stirred to manufacture the measurement liquid. CMC-Na and PEO are included in the concept of "polymer having a dispersion function for silica aerogel" in the disclosure. Colloidal silica and silica powder are included in the concept of "inorganic particles having a hydroxyl group on the surface" in the disclosure.

### <Measurement of Stringiness of Measurement Liquid>

The stringiness of the manufactured measurement liquid was measured by using "Stringiness/Spinnability/Coagulation Measurement Device NEVA (registered trademark) METER IMI0501" manufactured by Ishikawa Tekko Co., Ltd. The measurement was performed at room temperature, and a flat probe with a diameter of 3 mm was used. The pull-up speed (pulling speed) of the probe was set to 4 mm/s and 100 mm/s, and the string length at each speed was measured. From the measured string lengths, the stringiness ratio was calculated using the aforementioned formula (a). Table 1 shows the composition of the thermal insulation material composition including the measurement liquid, the mean particle diameter of the silica nanoparticles, the measurement results of stringiness, and other information. The mean particle diameter of the silica nanoparticles is a value converted from the specific surface area obtained by the BET adsorption method.

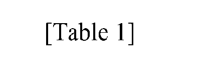

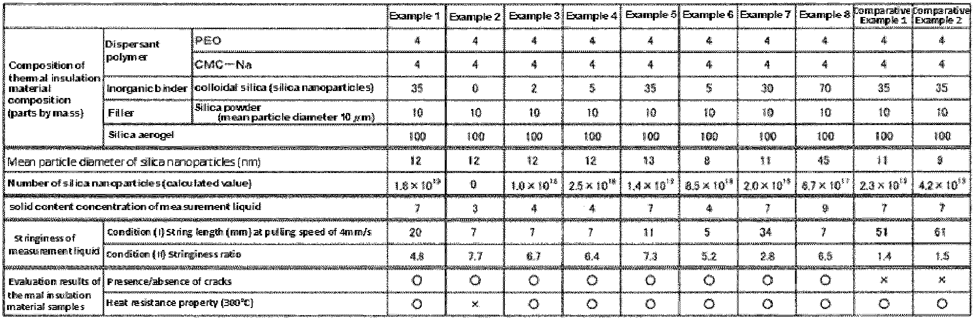

In addition, the number of the silica nanoparticles as the inorganic binder contained in the measurement liquid was calculated by assuming the particle shape to be a perfect sphere and the specific gravity to be 2.2 g/cm³. Table 1 shows the number of silica nanoparticles, and FIG. 1 shows a graph of the relationship between the number of the silica nanoparticles and the stringiness (string length at a pulling speed of 4 mm/s). In FIG. 1, values such as "1.0E+17" and "1.0E+20" on the horizontal axis of the graph mean "1.0×10¹⁷" and "1.0×10²⁰", respectively. In addition, the measurement liquids of the examples are indicated by filled circles (excluding Example 2, which does not contain silica nanoparticles), and the measurement liquids of the comparative examples are indicated by filled triangles. As shown in FIG. 1, in the case where the number of the silica nanoparticles exceeded 1×10¹⁹, the string length increased as the number increased. In the measurement liquids of the comparative examples, the number of silica nanoparticles was greater and the string length was longer than the measurement liquids of the examples.

### (2) Evaluation of Thermal Insulation Material Sample

### <Manufacturing of Thermal Insulation Material Sample>

A silica aerogel ("P200" manufactured by Cabot Corporation) was added to each measurement liquid and stirred to manufacture a thermal insulation material composition. The manufactured composition was blade-coated onto the surface of a glass fiber nonwoven fabric with a thickness of 1 mm, targeting a coating film thickness of 0.5 mm, and then placed in a hot air oven and held at 80°C for one hour to dry. In this manner, a sheet-shaped thermal insulation material sample (hereinafter, may be referred to simply as a sample) was manufactured in which a cured product of the composition was disposed on the surface of the nonwoven fabric. A portion of the cured product was impregnated into the surface layer portion of the nonwoven fabric. Here, the glass fiber nonwoven fabric is included in the concept of the substrate in the disclosure. In Table 1, the samples of Examples 1 to 8 are included in the concept of the thermal insulation material of the disclosure.

### <Presence or Absence of Cracks Generated in Cured Product>

The surface of the cured product of the thermal insulation material sample was visually observed to confirm the presence or absence of cracks. If no cracks were confirmed, the sample was evaluated as having no cracks (indicated by ○ in Table 1), and if cracks were confirmed, the sample was evaluated as having cracks (indicated by × in the same table).

As shown in Table 1, in the samples of Examples 1 to 8 satisfying Condition (I) in which the string length of the measurement liquid was 40 mm or less, no cracks were generated in the cured product in any of the samples. The samples also satisfied Condition (II) in which the stringiness ratio of the measurement liquid was 2 or more. In contrast, in the samples of Comparative Examples 1 and 2 in which the string length of the measurement liquid was longer than 40 mm, cracks were generated in the cured product in all of the samples. The samples also had a stringiness ratio of the measurement liquid of less than 2. As shown in FIG. 1, in the case where the string length is short, the number of silica nanoparticles is relatively low, so it is considered that the particles are more likely to be separated from each other and leveled, and the cohesive force between the particles is also reduced.

### <Heat Resistance of Sample>

A thermal insulation material sample was left to stand in an oven maintained at a temperature of 300°C for 24 hours, and the condition after heating was visually observed. In the case where there was almost no change in appearance, the sample was evaluated as "good heat resistance" (indicated by ○ in Table 1), and in the case where the sheet warped or curled, the sample was evaluated as "poor heat resistance" (indicated by × in the same table). As shown in Table 1, a result was obtained in which only the sample of Example 2, which did not contain silica nanoparticles as an inorganic binder, exhibited inferior heat resistance.

### Industrial Applicability

The thermal insulation material of the disclosure may be applied to various parts and components in the automotive field, the aviation field, the marine field, the logistics field, the housing field, the industrial equipment field, the information and communication equipment field, the home appliance field, the apparel field, and the like. In the automotive field, examples include interior parts such as door trims, ceiling materials, instrument panels, console boxes, and armrests. In the aviation field, examples include various hoses, and in the marine field, examples include thermal insulation members arranged on ship bottoms and the like. In the logistics field, examples include thermal insulation containers used for transporting food, pharmaceuticals, and the like. In the housing field, examples include building materials, wall materials, attic materials, window sashes, and the like. In the industrial equipment field, examples include thermal insulation members used in motor sections, sensor sections, and the like. In the information and communication equipment field, examples include thermal insulation members used in personal computers and smartphones. In the home appliance field, examples include thermal insulation members used in refrigerators, coolers, ovens, cameras, and the like. In the apparel field, examples include thermal insulation members used in jackets, trousers, socks, hats, and the like. In addition to the above, the thermal insulation material is also suitable for thermal insulation members used in drones, thermal insulation members for footwear such as insoles, thermal insulation members for outdoor goods and leisure goods such as tents and seat mats, and daily necessities such as cooler boxes. Furthermore, in the case where a substrate with a high heat resistance is provided, the thermal insulation material is also suitable for use as a fireproof thermal insulation material for steel frames in building materials, thermal insulation materials used for roofs and walls of factories and plants, piping and sealing members used in factories and plants, and various equipment such as presses, cutting machines, and drying furnaces.

## Claims

1. A thermal insulation material composition, comprising: silica aerogel; a polymer, having a dispersion function for the silica aerogel; inorganic particles, having a hydroxyl group on a surface thereof; and a liquid,
wherein, in a case where a stringiness of a measurement liquid obtained by excluding the silica aerogel from the thermal insulation material composition is measured, Condition (I) as follows is satisfied:
(I) a string length measured at a pulling speed of 4 mm/s is 40 mm or less.

2. The thermal insulation material composition according to Claim 1, wherein the stringiness of the measurement liquid further satisfies Condition (II) as follows:
(II) a value, that is, a stringiness ratio of a string length measured at a pulling speed of 100 mm/s relative to a string length measured at a pulling speed of 4 mm/s is 2 or more.

3. The thermal insulation material composition according to Claim 1 or Claim 2, wherein the inorganic particles comprise silica particles.

4. The thermal insulation material composition according to any one of Claim 1 to Claim 3, wherein the inorganic particles comprise nanoparticles having a mean particle diameter of 8 nm or more and 45 nm or less.

5. The thermal insulation material composition according to Claim 4, wherein a content of the nanoparticles is 1 part by mass or more and 70 parts by mass or less relative to 100 parts by mass of the silica aerogel.

6. The thermal insulation material composition according to any one of Claim 1 to Claim 5, wherein:
the liquid comprises water, and
the polymer comprises a water-soluble resin.

7. The thermal insulation material composition according to Claim 6, wherein the water-soluble resin comprises one or more selected from polyoxyalkylene and polyvinyl alcohol.

8. The thermal insulation material composition according to Claim 7, wherein the polyoxyalkylene comprises polyethylene oxide, polyethylene glycol, polyalkylene glycol, polypropylene glycol, polyoxyethylene, and polytetramethylene glycol.

9. A thermal insulation material, comprising a cured product of the thermal insulation material composition according to any one of Claim 1 to Claim 8.

10. The thermal insulation material according to Claim 9, wherein the cured product exhibits a sheet shape.

11. The thermal insulation material according to Claim 9 or Claim 10, comprising the cured product and a substrate supporting the cured product.

## Amended claims

### Amended claims under Art. 19.1 PCT

1. A thermal insulation material composition, comprising: silica aerogel; a polymer, having a dispersion function for the silica aerogel; inorganic particles, having a hydroxyl group on a surface thereof; and a liquid,
wherein the inorganic particles comprise nanoparticles having a mean particle diameter of 8 nm or more and 45 nm or less,
a content of the nanoparticles is 1 part by mass or more and 70 parts by mass or less relative to 100 parts by mass of the silica aerogel, and
in a case where a stringiness of a measurement liquid obtained by excluding the silica aerogel from the thermal insulation material composition is measured, Condition (I) as follows is satisfied:
(I) a string length measured at a pulling speed of 4 mm/s is 40 mm or less.

2. The thermal insulation material composition according to Claim 1, wherein the stringiness of the measurement liquid further satisfies Condition (II) as follows:
(II) a value, that is, a stringiness ratio of a string length measured at a pulling speed of 100 mm/s relative to a string length measured at a pulling speed of 4 mm/s is 2 or more.

3. The thermal insulation material composition according to Claim 1 or Claim 2, wherein the inorganic particles comprise silica particles.

4. (Cancelled)

5. (Cancelled)

6. The thermal insulation material composition according to any one of Claim 1 to Claim 5, wherein:
the liquid comprises water, and
the polymer comprises a water-soluble resin.

7. The thermal insulation material composition according to Claim 6, wherein the water-soluble resin comprises one or more selected from polyoxyalkylene and polyvinyl alcohol.

8. The thermal insulation material composition according to Claim 7, wherein the polyoxyalkylene comprises polyethylene oxide, polyethylene glycol, polyalkylene glycol, polypropylene glycol, polyoxyethylene, and polytetramethylene glycol.

9. A thermal insulation material, comprising a cured product of the thermal insulation material composition according to any one of Claim 1 to Claim 8.

10. The thermal insulation material according to Claim 9, wherein the cured product exhibits a sheet shape.

11. The thermal insulation material according to Claim 9 or Claim 10, comprising the cured product and a substrate supporting the cured product.
